(19) Europäisches Patentamt
European Patent Office
Office européen des brevets

(11) **EP 4 381 582 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **22740423.3**

(22) Anmeldetag: **11.07.2022**

(51) Internationale Patentklassifikation (IPC):
*H02J 7/00* (2006.01)     *H01M 10/44* (2006.01)

(52) Gemeinsame Patentklassifikation (CPC):
**H02J 7/007184; H01M 10/44; H01M 10/443; H01M 10/48; H01M 10/486; H02J 7/007194;** H01M 2220/20

(86) Internationale Anmeldenummer:
**PCT/EP2022/069340**

(87) Internationale Veröffentlichungsnummer:
**WO 2023/011862 (09.02.2023 Gazette 2023/06)**

(54) **VERFAHREN ZUM BETRIEB EINER BATTERIE**

METHOD FOR OPERATING A BATTERY

PROCÉDÉ DE FONCTIONNEMENT D'UNE BATTERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2021 DE 102021004015**

(43) Veröffentlichungstag der Anmeldung:
**12.06.2024 Patentblatt 2024/24**

(73) Patentinhaber: SEW-EURODRIVE GmbH & Co. KG
76646 Bruchsal (DE)

(72) Erfinder:
• **SCHMIDT, Josef**
**76661 Philippsburg - Huttenheim (DE)**
• **HAUCK, Matthias**
**68723 Schwetzingen (DE)**
• **SCHÄFER, Jens**
**76676 Graben-Neudorf (DE)**
• **ZÖLLER, Thomas**
**76646 Bruchsal (DE)**
• **BAENA, Manuel**
**76137 Karlsruhe (DE)**

(56) Entgegenhaltungen:
EP-B1- 0 783 200     US-A1- 2016 254 687
US-B2- 10 393 817

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb einer Batterie, insbesondere in einem fahrerlosen Transportfahrzeug.

In verschiedenen technischen Anlagen, beispielsweise in Supermärkten, Industriehallen, Logistikzentren, Krankenhäusern und Produktionswerken, werden fahrerlose Transportfahrzeuge eingesetzt. Die fahrerlosen Transportfahrzeuge dienen beispielsweise zum Transport von Gegenständen. Fahrerlose Transportfahrzeuge umfassen dabei einen elektrischen Energiespeicher zur Versorgung des Fahrzeugs. Der Energiespeicher ist in Form einer wieder aufladbaren Batterie ausgebildet. Das Fahrzeug ist somit autark und unabhängig in der technischen Anlage betreibbar.

Wenn die Batterie leer ist, so ist ein Aufladen der Batterie erforderlich. Das Fahrzeug weist in der Regel ein Batteriemanagementsystem zum Steuern und Überwachen der Batterie auf. Aufgabe des Batteriemanagementsystems ist es unter anderem, einen Ladezustand der Batterie zu ermitteln. Die Kenntnis des aktuellen Ladezustands ermöglicht eine Vorhersage darüber, wieviel Energie noch entnehmbar ist, bevor die Batterie entladen ist. Wenn die Batterie geladen wird, so ermöglicht die Kenntnis des aktuellen Ladezustands eine Vorhersage darüber, wie lange der Ladevorgang noch dauert, bis die Batterie vollgeladen ist.

Insbesondere bei Batterien mit NiMH-Zellen (Nickel-Metall-Hydrid) ist eine Berechnung des aktuellen Ladezustands schwierig, da solche Zellen eine verhältnismäßig schlechte Korrelation zwischen einer anliegenden Spannung und dem Ladezustand besitzen. Die Berechnung des aktuellen Ladezustands erfolgt beispielsweise mittels eines Amperestundenzählers durch Integration eines durch die Batterie fließenden Stroms. Diese Art der Berechnung ist jedoch langfristig fehlerbehaftet, es kommt zu Abweichungen zwischen dem so berechneten Ladezustand und dem realen Ladezustand. Daher ist regelmäßig ein Abgleich des Ladezustands erforderlich um Abweichungen zwischen dem berechneten Ladezustand und dem realen Ladezustand zu minimieren.

Aus der EP 1 249 886 B1 ist ein Verfahren zur Ladesteuerung einer Sekundärbatterie für ein automatisch geführtes Fahrzeug bekannt. Dabei wird die Ladungsmenge der Sekundärbatterie gesteuert.

Aus der US 2006/0132099 A1 ist ein Batterieladegerät bekannt. Das Batterieladegerät umfasst eine Steuereinheit zur Steuerung eines Ladestroms in Abhängigkeit von einer Batteriespannung und einer Batterietemperatur.

Aus der DE 10 2017 222 217 A1 ist ein Verfahren zum Laden einer Batterie bekannt. Dabei wird ein Ladevorgang der Batterie durch ein Batteriemanagementsystem mit einer bereitzustellenden konstanten Ladeleistung begonnen.

Aus der DE 10 2018 005 843 A1 ist ein Verfahren zur Bestimmung des Ladezustandes einer Energiespeicherzelle, insbesondere eines elektrochemischen Energiespeichers, bekannt. Die an der Energiespeicherzelle anliegende Spannung und der Strom der Energiespeicherzelle werden erfasst. Aus einer inneren Zellspannung und einem ladungsbezogenen Spannungsgradienten wird ein Ladezustand ermittelt.

Aus der EP 0 783 200 B1 ist ein Verfahren zum Laden einer wieder aufladbaren Batterie bekannt. Dabei wird während eines Ladevorgangs eine Rate der Änderungen der Batterietemperatur überwacht.

Aus der US 10,393,817 B2 ist ein Verfahren zur Bestimmung eines Referenzenergieprofils durch Vergleichen von Ladeverläufen von Batterien während mehrerer Ladezyklen bekannt.

Aus der US 2016/0254687 A1 ist ein Batteriemodul bekannt, welches eine Lithium-Ionen-Batterie und eine Steuereinheit umfasst.

Der Erfindung liegt die Aufgabe zugrunde, ein Verfahren zum Betrieb einer Batterie, insbesondere in einem fahrerlosen Transportfahrzeug, weiterzubilden.

Die Aufgabe wird durch ein Verfahren zum Betrieb einer Batterie mit den in Anspruch 1 angegebenen Merkmalen gelöst. Vorteilhafte Ausgestaltungen und Weiterbildungen sind Gegenstand der Unteransprüche.

Gemäß einem erfindungsgemäßen Verfahren zum Betrieb einer Batterie, insbesondere in einem fahrerlosen Transportfahrzeug, wird die Batterie ab einem Startzeitpunkt in einem Ladevorgang geladen. Während des Ladevorgangs werden zu einer Mehrzahl von Messzeitpunkten ein durch die Batterie fließender Ladestrom, eine an der Batterie anliegende Batteriespannung und eine in der Batterie herrschende Batterietemperatur gemessen. Dabei wird aus dem Ladestrom eine in die Batterie gebrachte Ladungsmenge berechnet. Aus der Batteriespannung und der Ladungsmenge wird ein Spannungsgradient berechnet, und aus einem Verlauf des Spannungsgradienten wird ein erstes Endkriterium ermittelt. Aus der Batterietemperatur und der Ladungsmenge wird ein Temperaturgradient berechnet, und aus einem Verlauf des Temperaturgradienten wird ein zweites Endkriterium ermittelt. Aus einem Verlauf der Batterietemperatur wird ein Temperaturanstieg berechnet, und ein drittes Endkriterium wird ermittelt, wenn der Temperaturanstieg einen Schwellenwert übersteigt. Der Ladevorgang wird beendet, nachdem mindestens eines der Endkriterien vorliegt.

Jedes der besagten Endkriterien ist ein Kriterium dafür, dass die Batterie vollständig geladen ist. Wenn also ein solches Endkriterium vorliegt, ist davon auszugehen, dass die Batterie vollständig geladen ist, und somit ist der Ladezustand der Batterie bekannt. Insbesondere die Ermittlung von Endkriterien mittels Spannungsgradient sowie Temperaturgradient hat sich als besonders robust und zuverlässig erwiesen. Das erfindungsgemäße Verfahren ermöglicht somit einen Abgleich des Ladezustands. Vorteilhaft ist die Batterie unmittelbar nach dem Abgleich vollgeladen, und das fahrerlose Transportfahrzeug ist somit sofort einsetzbar.

Gemäß einer vorteilhaften Ausgestaltung der Erfindung wird der Ladevorgang beendet, nachdem mindestens zwei der Endkriterien vorliegen. Es ist denkbar, dass eines der genannten Endkriterien fehlerhaft zu früh ermittelt wird, nämlich bevor die Batterie vollständig geladen ist. Wenn mindestens zwei der genannten Endkriterien vorliegen, so ist mit größerer Sicherheit davon auszugehen, dass die Batterie vollständig geladen ist. Ein fehlerhaftes zu frühes Beenden des Ladevorgangs, nämlich bevor die Batterie vollständig geladen ist, wird somit verhindert.

Gemäß einer bevorzugten Ausgestaltung der Erfindung umfasst der Ladevorgang eine erste Ladephase, in welcher die Batterie mit einer konstanten Ladespannung geladen wird, eine daran zeitlich anschließende zweite Ladephase, in welcher die Batterie mit einem Konstantladestrom geladen wird, und eine daran zeitlich anschließende dritte Ladephase, in welcher die Batterie mit dem Konstantladestrom geladen wird. Dabei werden während der dritten Ladephase die Endkriterien ermittelt.

In der ersten Ladephase fließt dabei ein verhältnismäßig hoher Ladestrom, der Ladezustand der Batterie wird somit verhältnismäßig schnell vergrößert. In der zweiten Ladephase erfolgt eine Stabilisierung der Messgrößen, insbesondere des Ladestroms, der Batteriespannung und der Batterietemperatur. In der dritten Ladephase sind die besagten Messgrößen ausreichend stabil, und die besagten Endkriterien daher mit ausreichender Genauigkeit und Zuverlässigkeit ermittelbar.

Gemäß einer vorteilhaften Weiterbildung der Erfindung wird die erste Ladephase zu dem Startzeitpunkt gestartet, und die zweite Ladephase wird gestartet, wenn der Ladestrom gleich einen definierten Stromgrenzwert ist oder den Stromgrenzwert unterschreitet, und die dritte Ladephase wird nach Ablauf einer definierten Zeitspanne gestartet. Der Stromgrenzwert ist beispielsweise 0,1 C, 0,5 C, 1 C oder 2 C. 1 C ist dabei ein Strom, der in einer Stunde eine leere Batterie vollständig lädt. Der in der ersten Ladephase fließende Ladestrom ist in der Regel größer als 2 C. Vorzugsweise ist der Stromgrenzwert dabei gleich dem Konstantladestrom.

Gemäß einer vorteilhaften Ausgestaltung der Erfindung wird zu jedem aktuellen Messzeitpunkt der Temperaturanstieg als Differenz aus der zu dem aktuellen Messzeitpunkt gemessenen Batterietemperatur und einer zu Beginn der zweiten Ladephase gemessenen Batterietemperatur berechnet.

Gemäß einer vorteilhaften Ausgestaltung der Erfindung wird zu jedem aktuellen Messzeitpunkt die Ladungsmenge durch Integration des Ladestroms über eine seit einem vorhergehenden Messzeitpunkt vergangene Zeitdauer berechnet. Somit ist das Verfahren unabhängig von der Größe des Ladestroms. Das Verfahren ist mit verhältnismäßig kleinen Ladeströmen, beispielsweise 0,1 C, ebenso anwendbar wie bei verhältnismäßig großen Ladeströmen, beispielsweise 2 C.

Gemäß einer vorteilhaften Ausgestaltung der Erfindung wird zu jedem aktuellen Messzeitpunkt eine Spannungsdifferenz aus der zu dem aktuellen Messzeitpunkt gemessenen Batteriespannung und einer zu dem vorhergehenden Messzeitpunkt gemessenen Batteriespannung berechnet, und der Spannungsgradient wird als Quotient aus der Spannungsdifferenz und der Ladungsmenge berechnet.

Gemäß einer vorteilhaften Ausgestaltung der Erfindung wird zu jedem aktuellen Messzeitpunkt eine Temperaturdifferenz aus der zu dem aktuellen Messzeitpunkt gemessenen Batterietemperatur und einer zu dem vorhergehenden Messzeitpunkt gemessenen Batterietemperatur berechnet, und der Temperaturgradient wird als Quotient aus der Temperaturdifferenz und der Ladungsmenge berechnet.

Gemäß einer vorteilhaften Ausgestaltung der Erfindung wird aus dem Verlauf des Spannungsgradienten das erste Endkriterium ermittelt, wenn der Spannungsgradient zunächst einen Spitzenwert erreicht hat und anschließend einen Endwert unterschreitet, wobei der Endwert kleiner als der Spitzenwert ist.

Gemäß einer vorteilhaften Ausgestaltung der Erfindung wird aus dem Verlauf des Temperaturgradienten das zweite Endkriterium ermittelt, wenn der Temperaturgradient einen Maximalwert überschreitet.

Gemäß einer vorteilhaften Weiterbildung der Erfindung wird dabei zu einem bestimmten Zeitpunkt, insbesondere zu Beginn der dritten Ladephase, ein Anfangswert des Temperaturgradienten gemessen, und der Maximalwert wird aus dem Anfangswert berechnet. Beispielsweise wird der Maximalwert zu 300% des Anfangswerts berechnet.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:

Figur 1: einen beispielhaften zeitlichen Verlauf eines Spannungsgradienten während eines Ladevorgangs einer Batterie und

Figur 2: einen beispielhaften zeitlichen Verlauf eines Temperaturgradienten während eines Ladevorgangs einer Batterie.

Eine Batterie in einem fahrerlosen Transportfahrzeug wird geladen. Die Batterie weist NiMH-Zellen (Nickel-Metall-Hydrid) auf. Der Ladevorgang beginnt zu einem Startzeitpunkt T0 und endet zu einem Endzeitpunkt TX. Während des Ladevorgangs werden zu einer Mehrzahl von Messzeitpunkten ein durch die Batterie fließender Ladestrom IL, eine an der Batterie anliegende Batteriespannung UB und eine in der Batterie herrschende Batterietemperatur TB gemessen. Der Ladevorgang umfasst eine erste Ladephase P1, eine daran zeitlich anschließende zweite Ladephase P2 und eine daran zeitlich anschließende dritte Ladephase P3.

Die erste Ladephase P1 wird zu dem Startzeitpunkt T0 gestartet. In der ersten Ladephase P1 wird die Batterie von einer elektrischen Energiequelle mit einer konstanten Ladespannung geladen. Die Energiequelle umfasst dabei einen Vorwiderstand. Die Batteriespannung UB ist somit kleiner als die Ladespannung und steigt mit zunehmender Ladung der Batterie an. Der Ladestrom IL nimmt mit zunehmender Ladung der Batterie ab.

Die zweite Ladephase P2 wird gestartet, wenn der Ladestrom IL gleich einen definierten Stromgrenzwert ist oder den Stromgrenzwert unterschreitet. In der zweiten Ladephase P2 wird die Batterie von der elektrischen Energiequelle mit einem Konstantladestrom IC geladen. Der besagte Stromgrenzwert ist vorliegend gleich dem Konstantladestrom IC. Die Batteriespannung UB steigt mit zunehmender Ladung der Batterie weiter an. Die zweite Ladephase P2 dauert eine definierte Zeitspanne, beispielsweise eine Minute.

Die dritte Ladephase P3 wird nach Ablauf der besagten definierten Zeitspanne gestartet. In der dritten Ladephase P3 wird die Batterie von der elektrischen Energiequelle weiter mit dem Konstantladestrom IC geladen. Die dritte Ladephase P3 endet zu dem bereits erwähnten Endzeitpunkt TX.

Während der dritten Ladephase P3 wird zu jedem aktuellen Messzeitpunkt MA eine Ladungsmenge ΔQ ermittelt, die während einer Zeitdauer seit einem vorhergehenden Messzeitpunkt MV in die Batterie gebracht wurde. Die Ladungsmenge ΔQ wird dabei durch Integration des Ladestroms IL über die seit dem vorhergehenden Messzeitpunkt vergangene Zeitdauer berechnet. Für die Berechnung der Ladungsmenge ΔQ gilt:

$$\Delta Q = \int_{t=MV}^{t=MA} IL \, dt$$

Der vorhergehende Messzeitpunkt MV liegt zeitlich nicht zwingend unmittelbar vor dem aktuellen Messzeitpunkt MA. Es ist denkbar, dass in der Zeitdauer zwischen dem aktuellen Messzeitpunkt MA und dem vorhergehenden Messzeitpunkt MV mehrere weitere Messzeitpunkte liegen.

Während der dritten Ladephase P3 wird zu jedem aktuellen Messzeitpunkt MA auch eine Spannungsdifferenz ΔU ermittelt. Die Spannungsdifferenz ΔU wird als Differenz aus der zu dem aktuellen Messzeitpunkt MA gemessenen Batteriespannung UB und einer zu dem vorhergehenden Messzeitpunkt MV gemessenen Batteriespannung UB berechnet. Ferner wird ein Spannungsgradient GU als Quotient aus der Spannungsdifferenz ΔU und der besagten Ladungsmenge ΔQ ermittelt. Für die Berechnung des Spannungsgradienten GU gilt:

$$GU = \frac{\Delta U}{\Delta Q}$$

Während der dritten Ladephase P3 wird zu jedem aktuellen Messzeitpunkt MA auch eine Temperaturdifferenz ΔT ermittelt. Die Temperaturdifferenz ΔT wird als Differenz aus der zu dem aktuellen Messzeitpunkt MA gemessenen Batterietemperatur TB und einer zu dem vorhergehenden Messzeitpunkt MV gemessenen Batterietemperatur TB berechnet. Ferner wird ein Temperaturgradient GT als Quotient aus der Temperaturdifferenz ΔT und der besagten Ladungsmenge ΔQ ermittelt. Für die Berechnung des Temperaturgradienten GT gilt:

$$GT = \frac{\Delta T}{\Delta Q}$$

Während der dritten Ladephase P3 wird zu jedem aktuellen Messzeitpunkt MA auch ein Temperaturanstieg AT ermittelt. Der Temperaturanstieg AT wird als Differenz aus der zu dem aktuellen Messzeitpunkt MA gemessenen Batterietemperatur TB und einer zu Beginn der zweiten Ladephase P2 gemessenen Batterietemperatur TB berechnet.

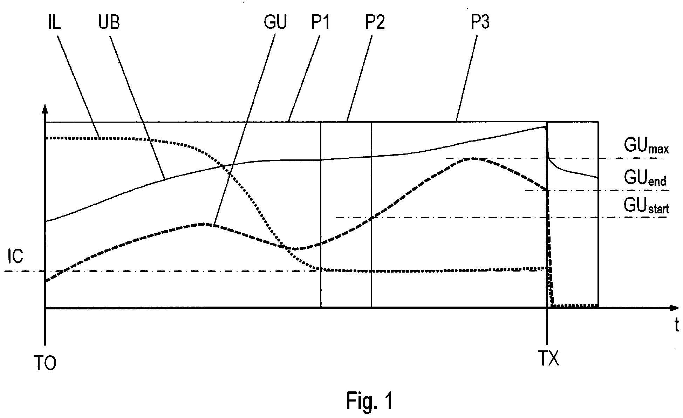

In Figur 1 ist ein beispielhafter zeitlicher Verlauf eines Spannungsgradienten GU sowie eines Ladestroms IL und einer Batteriespannung UB während des Ladevorgangs der Batterie dargestellt. Auf der Abszisse ist dabei eine Zeit t aufgetragen, auf der Ordinate sind die entsprechenden Messwerte und berechneten Werte aufgetragen.

Aus dem Verlauf des Spannungsgradienten GU wird ein erstes Endkriterium ermittelt. Das erste Endkriterium ist ein Kriterium dafür, dass die Batterie vollständig geladen ist. Das erste Endkriterium wird während der dritten Ladephase P3 ermittelt, wenn der Spannungsgradient GU zunächst einen Spitzenwert GUmax erreicht hat und anschließend einen Endwert GUend unterschreitet. Der Spitzenwert GUmax ist dabei ein lokales Maximum des Spannungsgradienten GU über die Zeit t.

Zu Beginn der dritten Ladephase P3 wird auch ein Startwert GUstart des Spannungsgradienten GU gemessen. Der Spitzenwert GUmax ist, wie bereits erwähnt, ein lokales Maximum des Spannungsgradienten GU über die Zeit t, und somit größer als der Startwert GUStart. Der Spitzenwert GUmax ist ebenfalls größer als der Endwert GUend.

Beispielsweise wird der Spitzenwert GUmax im zeitlichen Verlauf des Spannungsgradienten GU gemessen, und der Endwert GUend wird aus dem Spitzenwert GUmax berechnet. Beispielsweise wird der Endwert GUend zu 70% des Spitzenwerts GUmax berechnet.

Beispielsweise wird der Endwert GUend vor dem Beginn des Ladevorgangs vorgegeben. In diesem Fall ist der Endwert GUend somit eine Konstante.

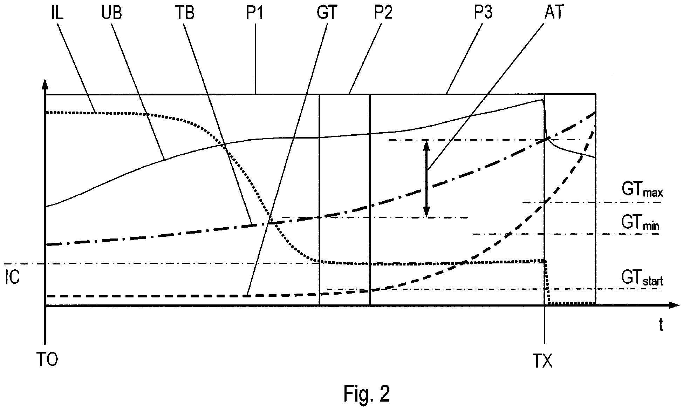

In Figur 2 ist ein beispielhafter zeitlicher Verlauf eines Temperaturgradienten GT sowie eines Ladestroms IL, einer Batteriespannung UB und einer Batterietemperatur TB während des Ladevorgangs der Batterie dargestellt. Auf der Abszisse ist dabei eine Zeit t aufgetragen, auf der Ordinate sind die entsprechenden Messwerte und berechneten Werte aufgetragen.

Aus dem Verlauf des Temperaturgradienten GT wird ein zweites Endkriterium ermittelt. Das zweite Endkriterium ist ein weiteres Kriterium dafür, dass die Batterie vollständig geladen ist. Das zweite Endkriterium wird während der dritten Ladephase P3 ermittelt, wenn der Temperaturgradient GT einen Maximalwert GTmax überschreitet.

Beispielsweise wird ein Anfangswert GTstart des Temperaturgradienten GT zu Beginn der dritten Ladephase P3 gemessen, und der Maximalwert GTmax wird aus dem Anfangswert GTstart berechnet. Beispielsweise wird der Maximalwert GTmax zu 300% des Anfangswerts GTstart berechnet.

Beispielsweise wird der Maximalwert GTmax vor dem Beginn des Ladevorgangs vorgegeben. In diesem Fall ist der Maximalwert GTmax somit eine Konstante.

Insbesondere ist der Maximalwert GTmax größer als ein Minimalwert GTmin, welcher vor dem Beginn des Ladevorgangs vorgegeben wird. Der Minimalwert GTmin ist somit eine Konstante.

Aus einem Verlauf der Batterietemperatur TB wird ein drittes Endkriterium ermittelt. Das dritte Endkriterium ist ein weiteres Kriterium dafür, dass die Batterie vollständig geladen ist. Das dritte Endkriterium wird während der dritten Ladephase P3 ermittelt, wenn der Temperaturanstieg AT einen Schwellenwert übersteigt.

Beispielsweise wird der besagte Schwellenwert vor dem Beginn des Ladevorgangs vorgegeben. In diesem Fall ist der Schwellenwert somit eine Konstante.

Wenn mindestens zwei der genannten Endkriterien vorliegen, so ist der Endzeitpunkt TX erreicht und der Ladevorgang wird beendet. Die Batterie wird dann von der elektrischen Energiequelle getrennt. Es wird davon ausgegangen, dass zu dem besagten Endzeitpunkt TX, zu welchem mindestens zwei der genannten Endkriterien vorliegen, die Batterie vollständig geladen ist.

## Bezugszeichenliste

| | |
|---|---|
| t | Zeit |
| T0 | Startzeitpunkt |
| TX | Endzeitpunkt |
| MA | aktueller Messzeitpunkt |
| MV | vorhergehender Messzeitpunkt |
| P1 | erste Ladephase |
| P2 | zweite Ladephase |
| P3 | dritte Ladephase |
| IL | Ladestrom |
| UB | Batteriespannung |
| TB | Batterietemperatur |
| ΔQ | Ladungsmenge |
| ΔU | Spannungsdifferenz |
| ΔT | Temperaturdifferenz |
| AT | Temperaturanstieg |
| GU | Spannungsgradient |
| GT | Temperaturgradient |
| IC | Konstantladestrom |

| | |
|---|---|
| GUstart | Startwert |
| GUmax | Spitzenwert |
| GUend | Endwert |
| GTmax | Maximalwert |
| GTmin | Minimalwert |
| GTstart | Anfangswert |

## Patentansprüche

1. Verfahren zum Betrieb einer Batterie,

   insbesondere in einem fahrerlosen Transportfahrzeug, wobei
   die Batterie ab einem Startzeitpunkt (T0) in einem Ladevorgang geladen wird;
   während des Ladevorgangs zu einer Mehrzahl von Messzeitpunkten
   ein durch die Batterie fließender Ladestrom (IL), eine an der Batterie anliegende Batteriespannung (UB) und
   eine in der Batterie herrschende Batterietemperatur (TB) gemessen werden; wobei
   aus dem Ladestrom (IL) eine in die Batterie gebrachte Ladungsmenge (ΔQ) berechnet wird;
   aus der Batteriespannung (UB) und der Ladungsmenge (ΔQ) ein Spannungsgradient (GU) berechnet wird;
   aus einem Verlauf des Spannungsgradienten (GU) ein erstes Endkriterium ermittelt wird;
   aus der Batterietemperatur (TB) und der Ladungsmenge (ΔQ) ein Temperaturgradient (GT) berechnet wird;
   aus einem Verlauf des Temperaturgradienten (GT) ein zweites Endkriterium ermittelt wird;
   aus einem Verlauf der Batterietemperatur (TB) ein Temperaturanstieg (AT) berechnet wird;
   ein drittes Endkriterium ermittelt wird, wenn der Temperaturanstieg (AT) einen Schwellenwert übersteigt; und
   der Ladevorgang beendet wird, nachdem mindestens eines der Endkriterien vorliegt.

**2.** Verfahren nach Anspruch 1, wobei
der Ladevorgang beendet wird, nachdem mindestens zwei der Endkriterien vorliegen.

**3.** Verfahren nach einem der vorangegangenen Ansprüche, wobei

der Ladevorgang
eine erste Ladephase (P1), in welcher die Batterie mit einer konstanten Ladespannung geladen wird,
eine daran zeitlich anschließende zweite Ladephase (P2), in welcher die Batterie mit einem Konstantladestrom (IC) geladen wird, und
eine daran zeitlich anschließende dritte Ladephase (P3), in welcher die Batterie mit dem Konstantladestrom (IC) geladen wird, umfasst, wobei
während der dritten Ladephase (P3) die Endkriterien ermittelt werden.

**4.** Verfahren nach Anspruch 3, wobei

die erste Ladephase (P1) zu dem Startzeitpunkt (T0) gestartet wird; und wobei
die zweite Ladephase (P2) gestartet wird, wenn der Ladestrom (IL) gleich einen definierten Stromgrenzwert ist oder den Stromgrenzwert unterschreitet; und wobei
die dritte Ladephase (P3) nach Ablauf einer definierten Zeitspanne gestartet wird.

**5.** Verfahren nach einem der Ansprüche 3 bis 4, wobei

zu jedem aktuellen Messzeitpunkt (MA)
der Temperaturanstieg (AT) als Differenz aus der zu dem aktuellen Messzeitpunkt (MA) gemessenen Batterietemperatur (TB) und einer zu Beginn der zweiten Ladephase (P2) gemessenen Batterietemperatur (TB) berechnet wird.

**6.** Verfahren nach einem der vorangegangenen Ansprüche, wobei

zu jedem aktuellen Messzeitpunkt (MA)
die Ladungsmenge (ΔQ) durch Integration des Ladestroms (IL) über eine seit einem vorhergehenden Messzeitpunkt (MV) vergangene Zeitdauer berechnet wird.

**7.** Verfahren nach Anspruch 6, wobei

zu jedem aktuellen Messzeitpunkt (MA)
eine Spannungsdifferenz (ΔU) aus der zu dem aktuellen Messzeitpunkt (MA) gemessenen Batteriespannung (UB) und einer zu dem vorhergehenden Messzeitpunkt (MV) gemessenen Batteriespannung (UB) berechnet wird; und

der Spannungsgradient (GU) als Quotient aus der Spannungsdifferenz (ΔU) und der Ladungsmenge (ΔQ) berechnet wird.

**8.** Verfahren nach einem der Ansprüche 6 bis 7, wobei

zu jedem aktuellen Messzeitpunkt (MA)
eine Temperaturdifferenz (ΔT) aus der zu dem aktuellen Messzeitpunkt (MA) gemessenen Batterietemperatur (TB) und einer zu dem vorhergehenden Messzeitpunkt (MV) gemessenen Batterietemperatur (TB) berechnet wird; und
der Temperaturgradient (GT) als Quotient aus der Temperaturdifferenz (ΔT) und der Ladungsmenge (ΔQ) berechnet wird.

**9.** Verfahren nach einem der vorangegangenen Ansprüche, wobei

aus dem Verlauf des Spannungsgradienten (GU) das erste Endkriterium ermittelt wird, wenn der Spannungsgradient (GU) zunächst einen Spitzenwert (GUmax) erreicht hat und anschließend einen Endwert (GUend) unterschreitet, wobei
der Endwert (GUend) kleiner als der Spitzenwert (GUmax) ist.

**10.** Verfahren nach einem der vorangegangenen Ansprüche, wobei
aus dem Verlauf des Temperaturgradienten (GT) das zweite Endkriterium ermittelt wird, wenn der Temperaturgradient (GT) einen Maximalwert (GTmax) überschreitet.

**11.** Verfahren nach Anspruch 10, wobei

zu einem bestimmten Zeitpunkt, insbesondere zu Beginn einer dritten Ladephase (P3), ein Anfangswert (GTstart) des Temperaturgradienten (GT) gemessen wird, und
der Maximalwert (GTmax) aus dem Anfangswert (GTstart) berechnet wird.

**Claims**

**1.** Method for operating a battery,

in particular in a driverless transportation vehicle, wherein
the battery is charged in a charging operation starting from a start time (T0);
a charging current (IL) flowing through the battery, a battery voltage (UB) applied to the battery and a battery temperature (TB) prevailing in the battery are measured during the charging operation at a plurality of measurement times;

wherein
an amount of charge ($\Delta Q$) input into the battery is calculated from the charging current (IL);
a voltage gradient (GU) is calculated from the battery voltage (UB) and the amount of charge ($\Delta Q$);
a first end criterion is ascertained from a characteristic of the voltage gradient (GU);
a temperature gradient (GT) is calculated from the battery temperature (TB) and the amount of charge ($\Delta Q$);
a second end criterion is ascertained from a characteristic of the temperature gradient (GT); a temperature increase (AT) is calculated from a characteristic of the battery temperature (TB);
a third end criterion is ascertained when the temperature increase (AT) exceeds a threshold value; and
the charging operation is terminated once at least one of the end criteria applies.

2. Method according to claim 1, wherein
the charging operation is terminated once at least two of the end criteria apply.

3. Method according to any of the preceding claims, wherein

the charging operation comprises
a first charging phase (P1), in which the battery is charged at a constant charging voltage,
a second charging phase (P2) temporally thereafter, in which the battery is charged at a constant charging current (IC), and
a third charging phase (P3) temporally thereafter, in which the battery is charged at the constant charging current (IC), wherein
the end criteria are ascertained during the third charging phase (P3).

4. Method according to claim 3, wherein

the first charging phase (P1) is initiated at the start time (T0); and wherein
the second charging phase (P2) is initiated when the charging current (IL) is equal to a defined electric current limit value or falls below the electric current limit value; and wherein the third charging phase (P3) is initiated once a defined time period has elapsed.

5. Method according to any of claims 3 to 4, wherein

at each current measurement time (MA)
the temperature increase (AT) is calculated as the difference between the battery temperature (TB) measured at the current measurement time (MA) and a battery temperature (TB) measured at the start of the second charging phase (P2).

6. Method according to any of the preceding claims, wherein

at each current measurement time (MA)
the amount of charge ($\Delta Q$) is calculated by integrating the charging current (IL) over a length of time that has passed since a previous measurement time (MV).

7. Method according to claim 6, wherein

at each current measurement time (MA)
a voltage difference ($\Delta U$) is calculated from the battery voltage (UB) measured at the current measurement time (MA) and a battery voltage (UB) measured at the previous measurement time (MV); and
the voltage gradient (GU) is calculated as a ratio of the voltage difference ($\Delta U$) and the amount of charge ($\Delta Q$).

8. Method according to any of claims 6 to 7, wherein

at each current measurement time (MA)
a temperature difference ($\Delta T$) is calculated from the battery temperature (TB) measured at the current measurement time (MA) and a battery temperature (TB) measured at the previous measurement time (MV); and
the temperature gradient (GT) is calculated as a ratio of the temperature difference ($\Delta T$) and the amount of charge ($\Delta Q$).

9. Method according to any of the preceding claims, wherein

the first end criterion is ascertained from the characteristic of the voltage gradient (GU) when the voltage gradient (GU) firstly has reached a peak value (GUmax) and then falls below an end value (GUend), wherein
the end value (GUend) is less than the peak value (GUmax).

10. Method according to any of the preceding claims, wherein
the second end criterion is ascertained from the characteristic of the temperature gradient (GT) when the temperature gradient (GT) exceeds a maximum value (GTmax).

11. Method according to claim 10, wherein

a starting value (GTstart) of the temperature gradient (GT) is measured at a particular time, in particular at the start of a third charging phase (P3), and
the maximum value (GTmax) is calculated from the starting value (GTstart).

## Revendications

1. Procédé de fonctionnement d'une batterie, en particulier dans un véhicule de transport sans conducteur, où

la batterie est chargée au cours d'une opération de charge à partir d'un instant de début (T0) ;
pendant l'opération de charge, un courant de charge (IL) circulant à travers la batterie, une tension de batterie (UB) appliquée à la batterie et une température de batterie (TB) régnant dans la batterie sont mesurés à plusieurs instants de mesure ;
une quantité de charge (ΔQ) introduite dans la batterie est calculée à partir du courant de charge (IL) ;
un gradient de tension (GU) est calculé à partir de la tension de batterie (UB) et de la quantité de charge (ΔQ) ;
un premier critère final est déterminé à partir d'une évolution du gradient de tension (GU) ;
un gradient de température (GT) est calculé à partir de la température de batterie (TB) et de la quantité de charge (ΔQ) ;
un deuxième critère final est déterminé à partir d'une évolution du gradient de température (GT) ;
une augmentation de température (AT) est calculée à partir d'une évolution de la température de batterie (TB) ;
un troisième critère final est déterminé lorsque l'augmentation de température (AT) dépasse une valeur de seuil ; et
il est mis fin à l'opération de chargement après qu'au moins un des critères finaux a été rempli.

2. Procédé selon la revendication 1, où il est mis fin à l'opération de chargement après qu'au moins deux des critères finaux ont été remplis.

3. Procédé selon l'une quelconque des revendications précédentes, où l'opération de charge comprend

une première phase de charge (P1), au cours de laquelle la batterie est chargée avec une tension de charge constante,
une deuxième phase de charge (P2) temporellement consécutive, au cours de laquelle la batterie est chargée avec un courant de charge constant (IC), et
une troisième phase de charge (P3) temporellement consécutive, au cours de laquelle la batterie est chargée avec le courant de charge constant (IC),
les critères finaux étant déterminés pendant la troisième phase de charge (P3),

4. Procédé selon la revendication 3, où

la première phase de charge (P1) est débutée à l'instant de début (T0) ; et
la deuxième phase de charge (P2) est débutée lorsque le courant de charge (IL) est égal à une valeur limite de courant définie ou est inférieur à la valeur limite de courant ; et
la troisième phase de charge (P3) est débutée après écoulement d'un laps de temps défini.

5. Procédé selon l'une quelconque des revendications 3 à 4, où
à chaque instant de mesure actuel (MA), l'augmentation de température (AT) est calculée sous la forme d'une différence entre la température de batterie (TB) mesurée à l'instant de mesure actuel (MA) et une température de batterie (TB) mesurée au début de la deuxième phase de charge (P2).

6. Procédé selon l'une quelconque des revendications précédentes, où
à chaque instant de mesure actuel (MA), la quantité de charge (ΔQ) est calculée par intégration du courant de charge (IL) sur une période de temps écoulée depuis un instant de mesure précédent (MV).

7. Procédé selon la revendication 6, où

à chaque instant de mesure actuel (MA), une différence de tension (ΔU) est calculée à partir de la tension de batterie (UB) mesurée à l'instant de mesure actuel (MA) et d'une tension de batterie (UB) mesurée à l'instant de mesure précédent (MV) ; et
le gradient de tension (GU) est calculé sous la forme d'un quotient de la différence de tension (ΔU) et de la quantité de charge (ΔQ).

8. Procédé selon l'une quelconque des revendications 6 à 7, où

à chaque instant de mesure actuel (MA), une différence de température (ΔT) est calculée à partir de la tension de batterie (TB) mesurée à l'instant de mesure actuel (MA) et d'une tension de batterie (TB) mesurée à l'instant de mesure précédent (MV) ; et
le gradient de température (GT) est calculé sous la forme d'un quotient de la différence de température (ΔT) et de la quantité de charge (ΔQ).

**9.** Procédé selon l'une quelconque des revendications précédentes, où
le premier critère final est déterminé à partir de l'évolution du gradient de tension (GU) lorsque le gradient de tension (GU) a d'abord atteint une valeur de crête (GUmax) et descend ensuite en dessous d'une valeur finale (GUend), la valeur finale (GUend) étant inférieure à la valeur de crête (GUmax).

**10.** Procédé selon l'une quelconque des revendications précédentes, où
le deuxième critère final est déterminé à partir de l'évolution du gradient de température (GT) lorsque le gradient de température (GT) dépasse une valeur maximale (GTmax).

**11.** Procédé selon la revendication 10, où
à un instant donné, en particulier au début d'une troisième phase de charge (P3), une valeur initiale (GTstart) du gradient de température (GT) est mesurée et la valeur maximale (GTmax) est calculée à partir de la valeur initiale (GTstart).

Fig. 1

Fig. 2

**EP 4 381 582 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1249886 B1
- US 20060132099 A1
- DE 102017222217 A1
- DE 102018005843 A1
- EP 0783200 B1
- US 10393817 B2
- US 20160254687 A1